# EUROPEAN PATENT SPECIFICATION

(11) **EP 2 416 079 B1**
(45) Date of publication and mention of the grant of the patent: **11.09.2019**
(21) Application number: 09842976.4
(22) Date of filing: 30.03.2009
(51) Int. Cl.: F24F 7/08, F24F 12/00, F24F 13/02

(54) **DUCT CONNECTION OPENING AND VENTILATION DEVICE**
KANALVERBINDUNGSÖFFNUNG UND -LÜFTUNGSVORRICHTUNG
OUVERTURE DE RACCORD DE CONDUIT ET DISPOSITIF DE VENTILATION

(43) Date of publication of application: 08.02.2012
(73) Proprietor: Mitsubishi Electric Corporation, Tokyo 100-8310 (JP)
(72) Inventor: NARUSE, Yuuhei, Tokyo 102-0073 (JP); FUJII, Yoshinori, Tokyo 102-0073 (JP); AOKI, Hiroki, Tokyo 100-8310 (JP); YOSHIMURA, Tsuneo, Tokyo 100-8310 (JP)
(74) Representative: Pfenning, Meinig & Partner mbB
(86) International application number: PCT/JP2009/056554
(87) International publication number: WO 2010/116466

(56) References cited:
- WO-A1-03/098121
- JP-A- 11 132 522
- JP-A- H07 332 727
- JP-A- 2000 171 070
- JP-A- 2005 003 345

## Description

### TECHNICAL FIELD

The present invention relates to a duct joint, particularly a duct joint that are provided with a thermal insulator, and to a ventilator.

### BACKGROUND ART

A conventional ventilator such as a thermal exchange ventilator is provided with a duct joint to connect a duct thereto. For example, Patent Document 1 suggests a technology of forming a duct joint integrally with a fan casing. A ventilator requires many bends and large length of a pipe, depending on the layout of a building in which it is installed, and this creates adverse effects such as lowering the air-blowing performance of the ventilator and increasing the operating noise. It is therefore preferable that the duct joint of the ventilator be freely changeable in accordance with the layout of the building or the like so that the bends and length of the pipe can be minimized. According to the description of Patent Document 1, however, because the duct joint is integrally formed with the fan casing, it is difficult to change the duct joint in accordance with the layout of the building or the like.

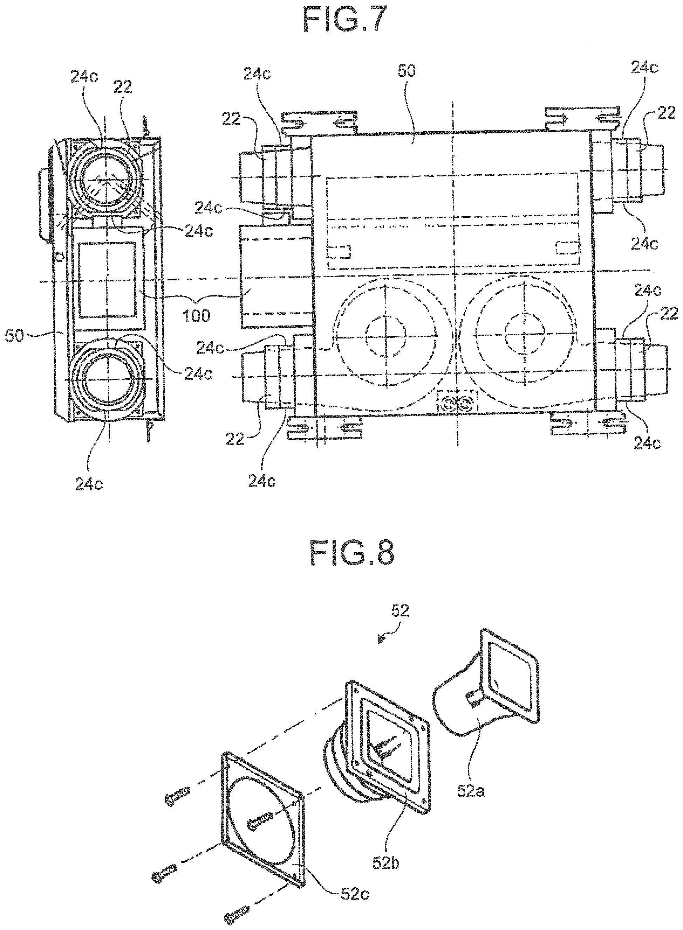

For this reason, the duct joint is designed separately from the main body of the ventilator such as the fan casing or the main body casing. In addition, if a ventilator is to be installed in a cold climate area where dew condensation occurs during winter, a thermal insulating layer (thermal insulator) may have to be arranged on the duct pipe and the duct joint to prevent dew condensation from forming. For example, a structure in which a duct joint 52 is formed by an air passage unit 52a and a thermal insulating layer 52b and these two components stacked together are pressed and screwed down by use of a separate component 52c may be adopted so that a structure separately formed from the main body of the ventilator can be achieved and dew condensation can be prevented from forming during winter (see FIG. 8).

JP H11-132522 A is directed to a ventilating device. The problem to be solved is to provide a ventilating device to increase a heat insulation effect and reduce the generation of noise by covering the whole of a heat-exchange element and a fan motor part with foamed styrol. The solution of this problem is: A heat-exchange element comprises a heat-exchange element structure formed by surrounding with foamed styrol; a structure on the fan side for gas discharge such that a casing part for a fan for exhaust is formed; and a structure on the fan side for air supply formed by surrounding it with foamed styrol in a manner to form a casing part for a fan for air supply. A fan motor is incorporated in the structures and contained in a body and by forming gas discharge passage and an air supply passage, a ventilating device to increase a heat insulation effect and reduce the generation of noise is provided.

Patent Document 1: Japanese Patent Application Laid-open No. 4-371738

### DISCLOSURE OF INVENTION

### PROBLEM TO BE SOLVED BY THE INVENTION

If the ventilator main body is to be installed in the attic or the like, visibility is often low because of the dimness, and the foothold is often unstable. It is therefore difficult to adjust the position of a duct joint that includes multiple components such as the air passage unit 52a, the thermal insulating layer 52b, and the separate component 52c with respect to the ventilator main body, and thus the workability is lowered. In addition, it is difficult to align the screw holes formed in the air passage unit 52a, the thermal insulating layer 52b, and the separate component 52c. Furthermore, with the increased number of components, there are concerns that some of them may come off or get lost. Still further, the increased number of components may create problems such as the increased weight and increased cost.

The present invention has been conceived in light of the above, and its purpose is to attain a duct joint that can improve workability at the working site, while making the installation position changeable and preventing dew condensation from forming.

### MEANS FOR SOLVING PROBLEM

In order to solve the aforementioned problems and attain the aforementioned objects, a duct joint mounted a ventilator according to one aspect of the present invention is constructed in such a manner as to include: a blower, to which a supply-air or exhaust-air duct is connected, and further include: an air passage unit through which a supply airflow or an exhaust airflow passes from the ventilator; and a thermal insulating unit that is laid on the air passage unit and covers a circumference of the air passage unit, wherein a supporting mechanism is arranged in the air passage unit to hold the thermal insulating unit.

### EFFECT OF THE INVENTION

According to the preset invention, the duct joint can be mounted onto the ventilator with a thermal insulator fixed to the air passage unit in advance, and it is therefore unlikely that the components come off during the installation work of the duct joint. In addition, because the duct joint can be mounted to the ventilator with the thermal insulator fixed to the air passage unit in advance, the possibility of losing the components can be reduced during the installation work of the duct joint. Moreover, a separate component that fixes the air passage unit and the thermal insulator to the ventilator is not required, and thus the light weight and reduced cost can be realized with the reduced number of components.

### BRIEF DESCRIPTION OF DRAWINGS

FIG. 1 is a perspective view of a thermal exchange ventilator (ventilator) viewed from below according to an embodiment of the present invention.
FIG. 2 is an exploded perspective view of the thermal exchange ventilator viewed from below.
FIG. 3 is an exploded perspective view of a duct joint.
FIG. 4 is a perspective unit view of the duct joint that has been assembled.
FIG. 5 is a detail view of a supporting mechanism for holding a thermal insulating layer.
FIG. 6 is an exploded perspective view of the duct joint viewed from the installation surface side.
FIG. 7 is a plan view of the thermal exchange ventilator and a side view thereof viewed from the direction of the duct joint.
FIG. 8 is an exploded view of a conventional duct joint.

### EXPLANATIONS OF LETTERS OR NUMERALS

- 1: Main body casing
- 2: Heat exchanger
- 3: Supply air blower
- 4: Exhaust air blower
- 5: Box
- 6: Outer air dust removal filter frame unit
- 7: Indoor exhaust dust removal filter
- 14a, 14b: Side panel
- 22: Duct joints
- 23: Air passage unit
- 23a: Base section
- 23b: Cylindrical section
- 23c: Guiding protrusion (positioning portion)
- 24: Thermal insulating layer (thermal insulating unit)
- 24a: Through hole for protection
- 24b: Cylinder section
- 24c: Cut sections
- 26: Supporting mechanism
- 26a: Protrusions
- 26b: Gripping unit (engaging unit)
- 26c: Large cylinder
- 26d: Small cylinder
- 26e: Through hole
- 26f: Groove
- 26g: U-shaped hole (exposed hole)
- 26h: Tip portion
- 31: Formed piece made of sheet metal
- 31a: Top panel
- 31b, 31c: Side panel
- 32: Bottom panel
- 50: Thermal exchange ventilator (ventilator)

### BEST MODE(S) FOR CARRYING OUT THE INVENTION

Exemplary embodiments of the ventilator that is provided with a duct joint according to the present invention are explained in detail below with reference to the drawings. The present invention is not limited to these embodiments, however.

### Embodiments

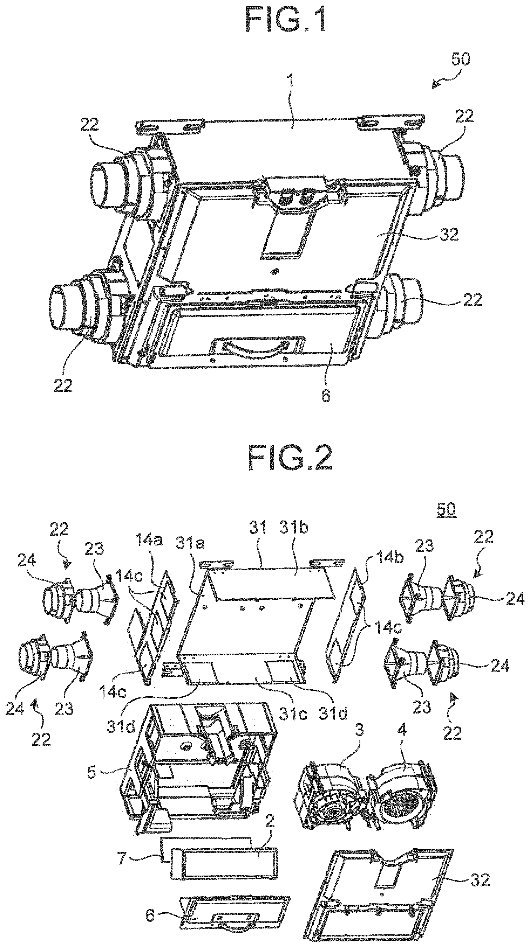

FIG. 1 is a perspective view of a thermal exchange ventilator (ventilator) viewed from below. FIG. 2 is an exploded perspective view of the thermal exchange ventilator of FIG. 1 viewed from below.

A thermal exchange ventilator 50 is configured to mainly include a main body casing 1, a box 5, and a duct joint 22. The main body casing 1 is configured to be a hexahedral box. The main body casing 1 is configured to include a formed piece made of sheet metal 31, a bottom panel 32, and side panels 14a and 14b. The formed piece made of sheet metal 31 includes three surfaces, a top panel 31a and a pair of side panels 31b and 31c that are prepared by bending a pair of opposing sides of this top panel 31a in such a manner as to form a U shape in cross section. The bottom panel 32 is arranged to face the top panel 31a. The side panels 14a and 14b cover the two openings of a hollow body formed of the formed piece made of sheet metal 31 and the bottom panel 32. Thus, the main body casing 1 has six surfaces, the top panel 31a, the bottom panel 32, and the side panels 31b, 31c, 14a, and 14b. The bottom panel 32 has a drain-plate structure, for which a molded resin product is used, for example.

The box 5 houses a laminated-type heat exchanger 2, a supply air blower 3, and an exhaust air blower 4 and is arranged inside the main body casing 1. For example, a Styrene-molded product is used for the box 5. The heat exchanger 2 is detachably mounted on the box 5. In the heat exchanger 2, a primary air passage and a secondary air passage are provided independently from each other. Detailed explanation for the primary air passage and the secondary air passage is omitted. An outer air dust removal filter frame unit 6 and an indoor exhaust dust removal filter 7 are arranged on the windward sides of the air passages of the heat exchanger 2. The outer air dust removal filter frame unit 6 and the indoor exhaust dust removal filter 7 are designed to be detachable from the bottom panel 32 side.

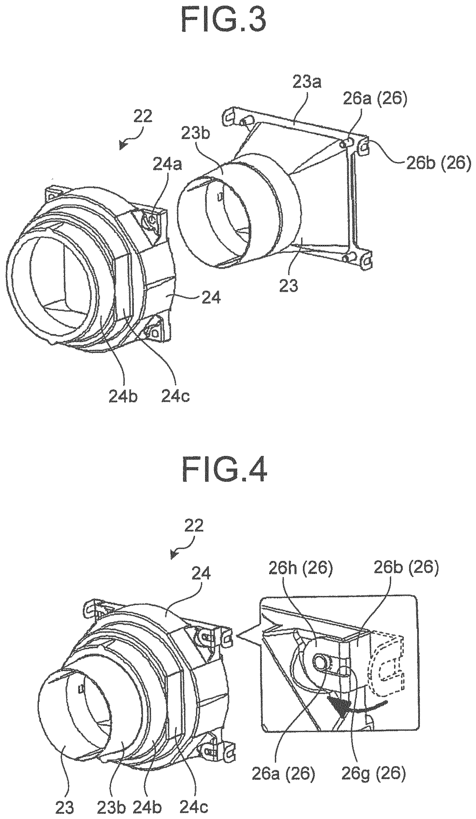

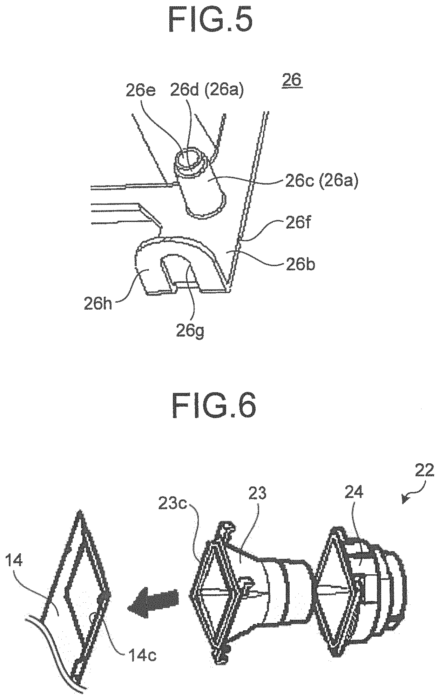

Next, an explanation of the duct joint 22 is provided. FIG. 3 is an exploded perspective view of the duct joint. FIG. 4 is a perspective unit view of the assembled duct joint 22. FIG. 5 is a detail view of a supporting mechanism that holds the thermal insulating layer (thermal insulating unit).

The duct joint 22 is configured to include an air passage unit 23 and a thermal insulating layer 24. The duct joint 22 is mounted on one of air passage openings 14c formed in the side panels 14a and 14b. The duct joints 22 are sorted into an indoor supply air opening, an exhaust air inlet, an exhaust air outlet, and an outside air inlet, in accordance with their installation positions. The air passage unit 23 includes a base section 23a that serves as a mounting base for mounting the duct joint 22 onto the side panels 14a and 14b and a cylindrical section 23b that is shaped into a cylinder. The inside of the cylindrical section 23b serves as an air passage through which a supply airflow or an exhaust airflow can pass from the thermal exchange ventilator 50. The outer diameter of the cylindrical section 23b is approximately 100 millimeters so that a duct of 100 millimeters in interior diameter can be connected thereto.

In the base section 23a, supporting mechanisms 26 are provided at four positions to hold the thermal insulating layer 24. Each of the supporting mechanisms 26 is configured to include a protrusion 26a and an engaging unit 26b. The protrusion 26a is formed to protrude from the base section 23a, and has a stepped structure that includes a large cylinder 26c of a large diameter and a small cylinder 26d of a small diameter. A through hole 26e is formed in the protrusion 26a in such a manner to penetrate from the surface of the air passage unit 23 attached to the side panels 14a and 14b through the opposite surface thereof. The through hole 26e serves as a screw hole to attach the duct joint 22 to the side panels 14a and 14b.

The engaging unit 26b is prepared in such a manner as to extend externally from the base section 23a. A groove 26f is formed at the border of the base section 23a and the engaging unit 26b. This groove 26f forms a hinge structure with which the engaging unit 26b can be bent along the groove 26f. The engaging unit 26b is not limited to the structure that is bendable along the groove 26f, but the structure may be such that it is bendable by use of a hinge or the like. The number of engaging units 26b arranged in the air passage unit 23 is not limited to four as indicated in the present embodiment, but it may be suitably changed.

The engaging unit 26b has a tip portion 26h that is bent, forming an L shape in cross section. A U-shaped hole (exposed hole) 26g is formed in the tip portion 26h. When the engaging unit 26b is bent along the groove 26f, the U-shaped hole 26g formed in the tip portion 26h is caught on the small cylinder 26d of the protrusion 26a so that the engaging unit 26b is engaged with the protrusion 26a. With the engaging unit 26b engaged with the protrusion 26a, a certain space is created between the tip portion 26h and the base section 23a. The thermal insulating layer 24 is sandwiched and held in this space between the tip portion 26h and the base section 23a. Furthermore, with the engaging unit 26b engaged with the protrusion 26a, the through hole 26e of the protrusion 26a is exposed from the U-shaped hole 26g.

FIG. 6 is an exploded perspective view of the duct joint 22 viewed from the installation surface side. A guiding protrusion (positioning section) 23c is formed on the surface of the base section 23a attached to the side panels 14a and 14b to protrude therefrom. The guiding protrusion 23c is engaged with the air passage openings 14c when attaching the duct joint 22 to the side panels 14a and 14b so that the position of the duct joint 22 is determined.

The thermal insulating layer 24 is stacked on the air passage unit 23 to cover the base section 23a and the cylindrical section 23b and has a function of preventing dew condensation from forming. A styrene-molded product may be adopted for the thermal insulating layer 24. In the thermal insulating layer 24, a cylindrical section 24b that covers the cylindrical section 23b is configured to have a stepped structure that includes cylinders of different diameters. According to the present embodiment, cylinders of approximately 125 millimeters and 150 millimeters in outer diameters are formed.

In addition, the external surface of the cylindrical section 24b of the thermal insulating layer 24 has a shape substantially the same as the shape of the external surface cut along a certain plane that is substantially parallel to the center axis of the cylindrical section 24b. According to the present embodiment, in the cylindrical section 24b, the cylindrical portion of approximately 150 millimeters in outer diameter has a shape that is cut by a plane in contact with the lateral surface of the cylindrical portion of approximately 125 millimeters in outer diameter, which is a cylindrical portion one step smaller. Cut sections 24c are provided in such a manner as to oppose each other across the cylindrical section 24b. In other words, the cylindrical portion of approximately 150 millimeters in outer diameter is cut off 25 millimeters each from the two sides in the direction of the radius. In general, the width of a tape for sealing the duct and the cylindrical section 24b is 50 millimeters. If the gap between the duct and the cylindrical section 24b exceeds 25 millimeters, the width of the portion of the tape overlaid and attached onto the duct portion for sealing the gap is reduced (to 10 millimeters, for example), which may lower the sealing performance. For this reason, it is favorable that the cut amount of the cylindrical section 24b be 25 millimeters or smaller in the direction of the radius.

FIG. 7 is a plan view of the thermal exchange ventilator 50 and a side view thereof viewed from the direction of the duct joint 22. As illustrated in FIG. 7, the cut sections 24c are arranged in part of the cylindrical section 24b so that when attaching the duct joint 22 to the thermal exchange ventilator 50, interference with the fastening hardware, the bottom panel 32, optionally obtainable components (attachments and damper units) 100, and the like can be avoided. In this manner, the outside dimension of the thermal exchange ventilator 50 can be minimized.

As illustrated in FIG. 4, with the thermal insulating layer 24 laid on the air passage unit 23, the cylindrical section 23b of the air passage unit 23 is partially exposed. In this manner, when a duct of 100 millimeters in inner diameter is to be connected, it can be connected to the cylindrical section 23b. Furthermore, when a duct of 125 millimeters or 150 millimeters in inner diameter is to be connected, it can be connected to the cylindrical section 24b of the thermal insulating layer 24. In other words, connection of ducts of different inner diameters can be dealt with by use of the duct joint 22. In addition, because ducts of different inner diameters can be directly connected without using a converting unit or the like for converting the duct diameter, pressure loss can be reduced in comparison with the situation of using a converting unit. Hence, the ventilation performance of the thermal exchange ventilator 50 can be improved. The outer diameter of the cylindrical section 23b of the air passage unit 23 and the outer diameter of the cylindrical section 24b of the thermal insulating layer 24 are not limited to the ones specified in the present embodiment, but can be variously modified.

In the thermal insulating layer 24, a through hole for protection 24a is formed in the portion that covers the base section 23a. The protrusion 26a that is configured to protrude from the base section 23a penetrates the through hole for protection 24a, with the thermal insulating layer 24 laid on the air passage unit 23.

Next, the assembly process of the duct joint 22 and the installation process of the duct joint 22 with respect to the side panels 14a and 14b are explained. First, as indicated in FIG. 4, the thermal insulating layer 24 is laid on the air passage unit 23. Here, the position of the thermal insulating layer 24 can be readily determined simply by placing the protrusion 26a of the air passage unit 23 into the through hole for protection 24a formed in the thermal insulating layer 24.

Next, the duct joint 22 is assembled by bending the gripping unit 26b to engage with the protrusion 26a. When the duct joint 22 is completed, the thermal insulating layer 24 gets caught and held in the certain space created between the tip portion 26h of the gripping unit 26b and the base section 23a of the air passage unit 23. In this manner, the thermal insulating layer 24 is tentatively fixed to the air passage unit 23.

Next, the assembled duct joint 22 is mounted on the air passage openings 14c of the side panels 14a and 14b. The duct joint 22 is screwed into the side panels 14a and 14b by means of the through hole 26e formed in the protrusion 26a. Because the thermal insulating layer 24 is tentatively fixed to the air passage unit 23, the air passage unit 23 and the thermal insulating layer 24 can be prevented from becoming separated from each other and coming off or getting lost, when mounting the duct joint 22 on the side panels 14a and 14b. Moreover, a separate component for fixing the air passage unit 23 and the thermal insulating unit 24 to the thermal exchange ventilator 50 (such as the separate component 52c indicated in FIG. 8) is not required, which can realize light weight and cost reduction in accordance with the reduced number of components.

Furthermore, the position of the duct joint 22 can be determined by inserting the guiding protrusion 23c formed on the base section 23a into the air passage openings 14c, and therefore low workability can be avoided even if visibility is insufficient, or if the foothold is unstable. In addition, because the duct joint 22 is assembled in advance, there is no cumbersome alignment job such as aligning the screw holes of the air passage unit and the thermal insulating layer when the duct joint 22 is mounted, and the installation workability of the duct joint 22 can be further enhanced.

Moreover, the assembly of the duct joint 22 is completed simply by overlaying the air passage unit 23 and the thermal insulating layer 24 and then bending the gripping unit 26b, and thus no special tool is required and the assembly work can be simplified.

In addition, even if the gripping unit 26b breaks along the groove 26f after the duct joint 22 is mounted on the side panels 14a and 14b, the mounting strength of the duct joint 22 can be maintained because the duct joint 22 is screwed down by way of the through hole 26e. Further, the tip portion 26h of the gripping unit 26b serves as a washer so that the thermal insulating layer 24 is prevented from falling off.

Still further, the mounting position of the duct joint 22 can be changed by forming an air passage opening 31d in a side panel 31c. In this manner, the position of the duct joint 22 can be changed in accordance with the layout of the building or the like. Moreover, if the duct joint 22 that is already mounted on the air passage opening 14c formed in the side panel 14a or 14b is to be rearranged onto the air passage opening 31d formed in the side panel 31c, the duct joint 22 that offers high workability is unlikely to cause problems of falling and losing of components, and the rearranging work can be readily conducted. The guiding protrusion 23c of the duct joint 22 is engaged with the air passage opening 31d also when it is mounted on the side panel 31c, and thereby delivers the positioning function.

### INDUSTRIAL APPLICABILITY

As discussed above, the duct joint according to the present invention is useful when it is mounted on the ventilator, and it is suitable especially for a heat exchanger that is allowed to change its installation position.

## Claims

1. A duct joint (22) mounted on a ventilator (50) that includes blowers (3, 4), to which a supply-air or exhaust-air duct is connected, comprising:
an air passage unit (23) through which a supply airflow or an exhaust airflow passes from the ventilator (50); and
a thermal insulating unit (24) that is laid on the air passage unit (23) and covers a circumference of the air passage unit (23),
wherein a supporting mechanism (26) is arranged in the air passage unit (23) to hold the thermal insulating unit (24),
**characterized in that**
the supporting mechanism comprises:
a protrusion (26a) formed in the air passage unit (23); and
an engaging unit (26b) formed to be bendable with respect to the air passage unit (23), and
the engaging unit (26b) is engaged with the protrusion (26a) when the engaging unit (26b) is bent, and holds the thermal insulating unit (24) by catching it (24) in a space between the engaging unit (26b) and the air passage unit (23) .

2. The duct joint (22) according to claim 1, wherein:
a through hole (26e) is formed in the protrusion (26a) in such a manner as to penetrate from a mounting surface of the air passage unit (23) with respect to the ventilator (50) through an opposing surface thereof;
an exposed hole (26g) is formed in the engaging unit (26b) to expose the through hole (26e) when being engaged with the protrusion (26a); and
the air passage unit (23) is configured in such a manner that the air passage unit (23) can be screwed into the ventilator (50) by way of the through hole (26e), while holding the thermal insulating unit (24).

3. The duct joint (22) according to claim 1 or 2, wherein a positioning portion (23c) is formed in the air passage unit (23) to determine a position of the air passage unit (23) with respect to the ventilator (50).

4. The duct joint (22) according to claim 3, wherein the positioning portion (23c) is configured to protrude from a mounting surface of the air passage unit (23) with respect to the ventilator (50), and is engaged with an opening (14c) formed in the ventilator (50) so that the position of the air passage unit (23) is determined.

5. The duct joint (22) according to any one of claims 1 to 4, wherein:
the thermal insulating unit (24) includes a cylinder portion (24b) that fits in an inner circumference of a duct that is to be connected; and
the cylinder portion has a shape substantially the same as a shape that is obtained by cutting a circumference of a cylinder along a certain plane that is parallel to an axis.

6. A ventilator (50) comprising:
a box-shaped casing (1);
blowers (3, 4) that is included in the casing (1): and
the duct joint (22) according to any one of claims 1 to 5 that is mounted on the casing (1).

## Patentansprüche

1. Kanalverbindung (22), die an einem Lüfter (50) befestigt ist, der Gebläse (3, 4) beinhaltet, an die ein Zuluft- oder Abluftkanal angebunden ist, umfassend:
eine Luftdurchgangseinheit (23), durch die ein Zuluftstrom oder ein Abluftstrom von dem Lüfter (50) strömt; und
eine Wärmeisolationseinheit (24), die auf die Luftdurchgangseinheit (23) gelegt ist und einen Umfang der Luftdurchgangseinheit (23) abdeckt,
wobei ein Stützmechanismus (26) in der Luftdurchgangseinheit (23) angeordnet ist, um die Wärmeisolationseinheit (24) zu halten,
**dadurch gekennzeichnet, dass**
der Stützmechanismus umfasst:
einen Vorsprung (26a), der in der Luftdurchgangseinheit (23) ausgebildet ist; und
eine Eingriffseinheit (26b), die so ausgebildet ist, dass sie in
Bezug auf die Luftdurchgangseinheit (23) biegbar ist, und
die Eingriffseinheit (26b) mit dem Vorsprung (26a) in Eingriff steht, wenn die Eingriffseinheit (26b) gebogen ist, und die Wärmeisolationseinheit (24) hält, indem sie sie (24) in einem Raum zwischen der Eingriffseinheit (26b) und der Luftdurchgangseinheit (23) einfängt.

2. Kanalverbindung (22) nach Anspruch 1, wobei:
ein Durchgangsloch (26e) in dem Vorsprung (26a) so ausgebildet ist, dass es von einer Montagefläche der Luftdurchgangseinheit (23) in Bezug auf den Lüfter (50) durch eine gegenüberliegende Fläche davon dringt;
ein freiliegendes Loch (26g) in der Eingriffseinheit (26b) ausgebildet ist, um das Durchgangsloch (26e) freizulegen, wenn es mit dem Vorsprung (26a) in Eingriff steht; und
die Luftdurchgangseinheit (23) so eingerichtet ist, dass die Luftdurchgangseinheit (23) über das Durchgangsloch (26e) in den Lüfter (50) einschraubbar ist, während sie die Wärmeisolationseinheit (24) hält.

3. Kanalverbindung (22) nach Anspruch 1 oder 2, wobei in der Luftdurchgangseinheit (23) ein Positionierungsabschnitt (23c) ausgebildet ist, um eine Position der Luftdurchgangseinheit (23) in Bezug auf den Lüfter (50) zu bestimmen.

4. Kanalverbindung (22) nach Anspruch 3, wobei der Positionierungsabschnitt (23c) eingerichtet ist, um von einer Montagefläche der Luftdurchgangseinheit (23) in Bezug auf den Lüfter (50) vorzustehen, und mit einer im Lüfter (50) ausgebildeten Öffnung (14c) in Eingriff steht, so dass die Position der Luftdurchgangseinheit (23) bestimmt wird.

5. Kanalverbindung (22) nach einem der Ansprüche 1 bis 4, wobei:
die Wärmeisolationseinheit (24) einen Zylinderabschnitt (24b) beinhaltet, der in einen Innenumfang eines zu verbindenden Kanals passt; und
der Zylinderabschnitt eine Form aufweist, die im Wesentlichen die Gleiche ist wie eine Form, die durch Schneiden eines Umfangs eines Zylinders entlang einer bestimmten Ebene, die parallel zu einer Achse ist, erhalten wird.

6. Lüfter (50), umfassend:
ein kastenförmiges Gehäuse (1);
Gebläse (3, 4), die in dem Gehäuse (1) enthalten sind: und die Kanalverbindung (22) nach einem der Ansprüche 1 bis 5, die an dem Gehäuse (1) befestigt ist.

## Revendications

1. Joint de conduit (22) monté sur un ventilateur (50) qui comprend des soufflantes (3, 4) auxquelles est raccordé un conduit d'air d'alimentation ou d'air d'évacuation, comprenant :
une unité de passage d'air (23) à travers laquelle un écoulement d'alimentation ou un écoulement d'évacuation passe par le ventilateur (50) ; et
une unité d'isolation thermique (24) qui est posée sur l'unité de passage d'air (23) et recouvre une circonférence de l'unité de passage d'air (23),
dans lequel un mécanisme de support (26) est agencé dans l'unité de passage d'air (23) pour maintenir l'unité d'isolation thermique (24),
**caractérisé en ce que** :
le mécanisme de support comprend :
une saillie (26a) formée dans l'unité de passage d'air (23) ; et
une unité de mise en prise (26b) formée pour pouvoir être pliée par rapport à l'unité de passage d'air (23), et
l'unité de mise en prise (26b) est mise en prise avec la saillie (26a) lorsque l'unité de mise en prise (26b) est pliée, et maintient l'unité d'isolation thermique (24) en l'attrapant (24) dans un espace entre l'unité de mise en prise (26b) et l'unité de passage d'air (23).

2. Joint de conduit (22) selon la revendication 1, dans lequel :
un trou débouchant (26e) est formé dans la saillie (26a) afin de pénétrer à partir d'une surface de montage de l'unité de passage d'air (23) par rapport au ventilateur (50) en passant par sa surface opposée ;
un trou exposé (26g) est formé dans l'unité de mise en prise (26b) pour exposer le trou débouchant (26e) lorsqu'il est mis en prise avec la saillie (26a) ; et
l'unité de passage d'air (23) est configurée de sorte que l'unité de passage d'air (23) peut être vissée dans le ventilateur (50) au moyen du trou débouchant (26e), tout en maintenant l'unité d'isolation thermique (24).

3. Joint de conduit (22) selon la revendication 1 ou 2, dans lequel une partie de positionnement (23c) est formée dans l'unité de passage d'air (23) pour déterminer une position de l'unité de passage d'air (23) par rapport au ventilateur (50).

4. Joint de conduit (22) selon la revendication 3, dans lequel la partie de positionnement (23c) est configurée pour faire saillie d'une surface de montage de l'unité de passage d'air (23) par rapport au ventilateur (50), et est mise en prise avec une ouverture (14c) formée dans le ventilateur (50) de sorte que la position de l'unité de passage d'air (23) est déterminée.

5. Joint de conduit (22) selon l'une quelconque des revendications 1 à 4, dans lequel :
l'unité d'isolation thermique (24) comprend une partie de cylindre (24b) qui se monte dans une circonférence interne d'un conduit qui doit être raccordé ; et
la partie de cylindre a sensiblement la même forme qu'une forme qui est obtenue en coupant une circonférence d'un cylindre le long d'un certain plan qui est parallèle à un axe.

6. Ventilateur (50) comprenant :
un carter en forme de boîte (1) ;
des soufflantes (3, 4) qui sont incluses dans le carter (1) ; et
le joint de conduit (22) selon l'une quelconque des revendications 1 à 5, qui est monté sur le carter (1).
